# EUROPEAN PATENT APPLICATION

(11) **EP 4 616 990 A1**
(43) Date of publication of application: **17.09.2025**
(21) Application number: 23888707.9
(22) Date of filing: 07.11.2023
(51) Int. Cl.: B23K 26/352, B29C 65/70

(54) **METAL-RESIN COMPOSITE MOLDED PRODUCT, METHOD FOR PROCESSING METAL MEMBER, AND METHOD FOR MANUFACTURING METAL-RESIN COMPOSITE MOLDED PRODUCT**

(30) Priority: 08.11.2022 JP 2022178512
(71) Applicant: Polyplastics Co., Ltd., Tokyo 108-8280 (JP)
(72) Inventor: HIROTA, Kento, Fuji-shi, Shizuoka 416-8533 (JP); OHI, Kazuki, Fuji-shi, Shizuoka 416-8533 (JP)
(74) Representative: Maiwald GmbH
(86) International application number: PCT/JP2023/040077
(87) International publication number: WO 2024/101360

(57) **Abstract**

One embodiment of the present invention is a metal-resin composite molded product including a metal member and a thermoplastic resin that are joined to each other. The metal member in this metal-resin composite molded product includes one surface. The one surface includes a joint surface portion that is joined to the thermoplastic resin and on which unevenness is formed. A cluster of substantially spherical parts are formed on the joined surface portion. An arithmetic mean peak curvature for the cluster is in a range from 2500 to 5000 (1/mm).

## Description

### FIELD

The present invention relates to a technique for joining a metal member and a thermoplastic resin to each other.

### BACKGROUND

Lightweight, high-strength, and high-functionality members can be each made by combining materials having different properties, and are widely used in various fields. The materials having different properties are, for example, an electrically conductive material such as metal and an electrically insulating material such as resin. For example, metal-resin composite molded products each made by joining a metal member and a thermoplastic resin to each other are used in automobile trim members such as a console box around an instrument panel, members around an engine, interior members, housings for electronic devices such as a digital camera and a mobile phone, interface connection members, electric power supply terminals, and the like.

Methods such as gluing and screwing are commonly known as methods for joining different kinds of materials such as metal and resin to each other, but are not preferable because of an increase in the number of work steps and the number of members. For this reason, various methods for joining a metal material and a resin material to each other have been proposed.

For example, Japanese Patent No. 4020957 describes that a surface of a metal material is laser-processed in a first scanning direction, and is laser-processed in a second scanning direction crossing the first scanning direction, and a different kind of material is joined to the surface. Japanese Patent Application Laid-Open Publication No. 2020-116806 describes that when unevenness is formed on a surface of a metal plate, an undercut rate of the unevenness is set within a predetermined range, and thus, when a resin molded product is joined to this surface, the joint strength is improved. Japanese Patent Application Laid-Open Publication No. 2013-71312 describes a composite molded product of metal and resin in which crater-shaped depressions are formed on the metal by laser light or the like, and granular sputters are formed on ridge-shaped protrusions resulting from melting and scattering of the metal surface. Patent No. 6819798 describes a composite structure that is formed by joining a surface-roughened metal member and a PPS member to each other, in which the number average of a developed area ratio (Sdr) at the interface is equal to or larger than 5 in a case of measurement performed at any five points on the surface of the surface-roughened metal member by using a confocal microscope in accordance with ISO 25178, and in which a melt viscosity of the PPS resin is in a range from 15 to 500 [Pa·s].

### BRIEF SUMMARY

### TECHNICAL PROBLEM

However, the conventional methods for joining a metal material and a resin material to each other cannot secure sufficient airtightness at a joint portion between the metal material and the resin material. For this reason, improvement in this regard is required.

In view of the above, an object of the present invention is to enhance airtightness at the joint portion when a metal member and a resin member are joined to each other.

### SOLUTION TO PROBLEM

A first aspect of the present invention provides a metal-resin composite molded product comprising a metal member and a thermoplastic resin that are joined to each other. The metal member in this metal-resin composite molded product includes one surface. The one surface includes a surface portion joined to the thermoplastic resin. The surface portion has surface texture in which an arithmetic mean peak curvature for the surface portion is in a range from 2500 to 5000 (1/mm).

A second aspect of the present invention provides a method for processing a metal member. This processing method includes irradiating a surface of the metal member with a high-energy beam, thereby causing the surface to have surface texture in which an arithmetic mean peak curvature for the surface is in a range from 2500 to 5000 (1/mm).

A third aspect of the present invention provides a method for manufacturing a metal-resin composite molded product including a metal member and a thermoplastic resin that are joined to each other. This manufacturing method includes irradiating a surface of the metal member with a high-energy beam, thereby causing the surface to have surface texture in which an arithmetic mean peak curvature for the surface is in a range from 2500 to 5000 (1/mm). The manufacturing method includes, following the irradiating, inserting the metal member into a mold, and injection-molding the thermoplastic resin by the mold, thereby joining the thermoplastic resin to the surface of the metal member.

### ADVANTAGEOUS EFFECTS

According to one aspect of the present invention, when a metal member and a resin member are joined to each other, airtightness at the joint portion can be enhanced.

### BRIEF DESCRIPTION OF DRAWINGS

FIG. 1 schematically illustrates a method for processing a metal member according to one embodiment of the present invention.
FIG. 2 is an image of an exemplary cluster formed on a laser-irradiated portion of the metal member.
FIG. 3 schematically illustrates a state of an interface between the metal member and a resin member, depending on magnitude of Spc for a surface of the metal member in a metal-resin composite molded product according to one embodiment.
FIG. 4 illustrates a shape of a test piece used in an airtightness test.
FIG. 5 schematically illustrates a configuration of a test device for the airtightness test.
FIG. 6 is a graph plotting a relation between Spc for a surface of a metal member and a pressure detected by the testing device of FIG. 5, based on test results of the airtightness test for Examples and Comparative Examples.

### DETAILED DESCRIPTION

The following describes a metal-resin composite molded product according to one embodiment of the present invention.

The metal-resin composite molded product according to one embodiment is formed by joining a metal member and a thermoplastic resin to each other. This metal-resin composite molded product includes the metal member including one surface. This one surface includes a joint surface area that is joined to the thermoplastic resin and on which unevenness is formed.

In one embodiment, the unevenness on the joint surface area is formed by a cluster of substantially spherical parts. The term "substantially spherical" concerning a shape of each of the parts constituting the cluster encompasses not only a sphere but also an ellipsoid, and a sphere or ellipsoid whose part is absent, and the like.

The cluster of the substantially spherical parts can be formed by irradiating the surface of the metal member with a laser, for example. For example, irradiating the surface of the metal member with a laser under predetermined irradiation conditions enables the cluster of the spherical parts to be formed on the metal surface.

As a result of the intensive research, the inventors of the present application have found that imparting a desired surface roughness as a surface texture to the joint surface area included in the one surface of the metal member and joined to the thermoplastic resin can enhance airtightness of the joint surface area between the metal and the resin of the metal-resin composite molded product, compared with conventional case. In the described case in the following embodiment, the desired surface roughness is achieved by forming the cluster of the substantially spherical parts on the joint surface area between the metal member and the thermoplastic resin. However, there is no limitation to this case. As long as the joint surface area between the metal member and the thermoplastic resin can have the desired surface roughness, a surface processing method for achieving this is not particularly limited.

A shape of the metal-resin composite molded product is also not particularly limited, and the present invention can be applied to a metal-resin composite molded product of any shape.

The metal member included in the metal-resin composite molded product may be, but not limited to, aluminum, copper, silver, gold, iron, titanium, nickel, magnesium, zinc, or an alloy thereof such as carbon steel or stainless steel, for example.

The surface of the metal material may be previously subjected to a surface treatment such as anodizing or may be previously painted. The preferable metal material is aluminum, magnesium, copper, or titanium from a standpoint of strength and a lighter weight. In the application requiring electrical conductivity as in a terminal or the like, the more preferable metal material is aluminum or copper, and the particularly preferable metal material is copper. In the application requiring a rigidity in a small-thickness structure, the preferable metal material is magnesium or titanium, and the particularly preferable metal material is titanium.

The resin included in the metal-resin composite molded product is preferably a thermoplastic resin that is easily processed by injection molding.

Examples of the preferable thermoplastic resin include polyacetal (POM), polyamide (PA), polybutylene terephthalate (PBT), polyethylene terephthalate (PET), polycarbonate (PC), polyphenylene sulfide (PPS), liquid crystal polymer (LCP), polyether ether ketone (PEEK), a styrene-based resin, an acryl-based resin, and the like.

A method for joining the metal member and the resin to each other may be, but not limited to, injection molding. For example, the joining can be made by insert molding in which the metal material is used as an insert member.

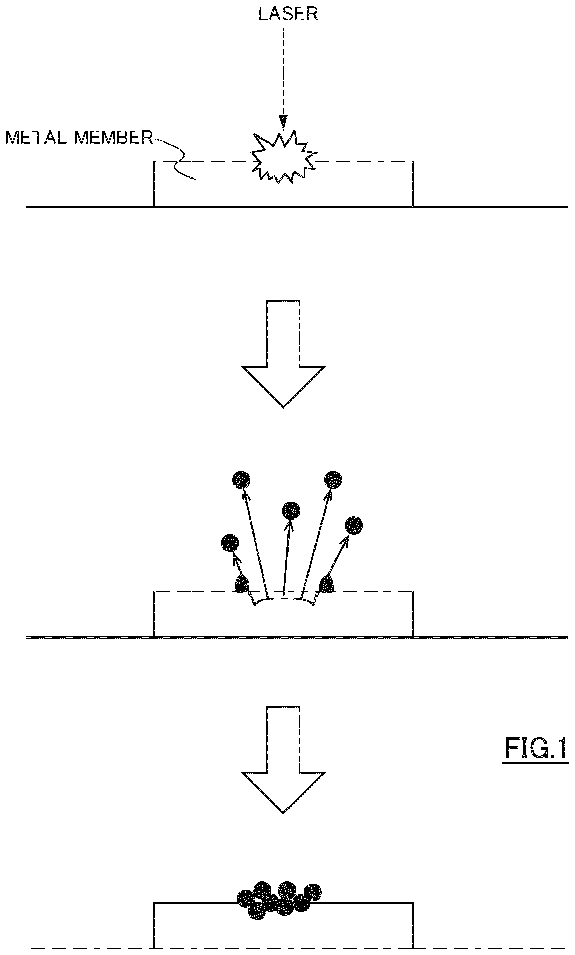

FIG. 1 schematically illustrates a method for processing the metal member according to one embodiment.

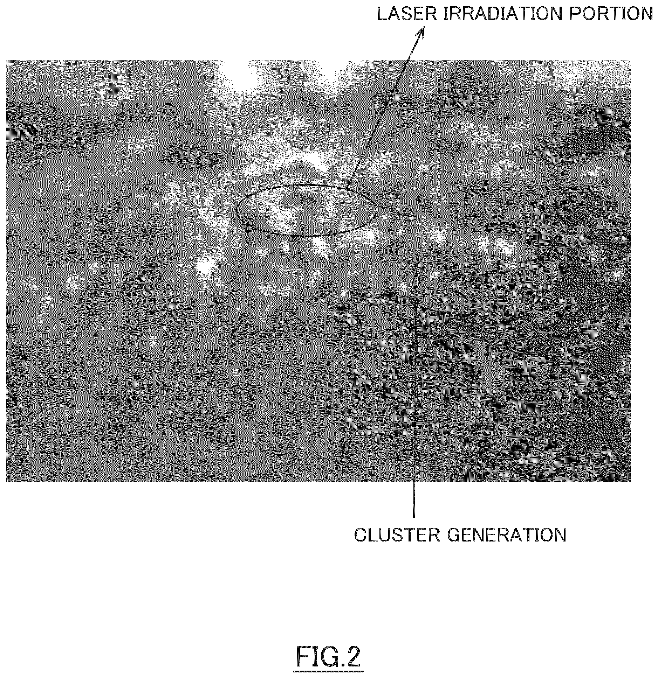

As illustrated in FIG. 1, when the metal member is irradiated with a laser, the metal at the surface of the metal member is melted by the laser as a high-energy beam, is extruded to an outside of a laser-irradiated portion, and then solidifies into spherical shapes by the surface tension so that unevenness is formed on the surface of the metal member. In one embodiment, the surface of the metal member is scanned by a laser at a fine pitch, and the generated spheres overlap with the surface in such a way as to form a cluster. Alternatively, liquid metal particles resulting from sublimation and scattering of the metal member solidify (re-adhere) and accumulate to form a cluster of the spherical parts. FIG. 2 is an image of an example of the cluster formed on the laser-irradiated portion when the metal member is irradiated with a laser.

Here, when a laser output (energy per unit time) is low, the metal at the metal surface does not melt, and the sublimation and the scattering of the liquid metal particles do not occur. For this reason, a laser output for forming the cluster of the spherical parts is appropriately determined depending on the metal material used as the metal member. In order that the melted metal extruded to an outside of the laser-irradiated portion is formed into the fine spheres, a laser scanning pitch is preferably equal to or smaller than 30 µm, more preferably equal to or smaller than 20 µm, and even more preferably equal to or smaller than 10 µm.

Energy applied to the metal surface per unit area per unit time is determined by a laser output and a scanning speed. For this reason, a scanning speed as well as a laser output are factors in forming the cluster of the spherical parts. A laser output and a scanning speed cause a temperature on the metal surface to locally rise in an extremely short time. Thereby, the cluster of the spherical parts are formed.

From a standpoint of securing the sufficient airtightness when the metal member is joined to the resin, it is preferable to form the cluster of the spherical parts over the entire joint surface area included in the metal member and joined to the resin. In order to achieve this, a laser scanning pitch may be set smaller than an irradiation diameter of a laser.

In the present disclosure, "high-energy beam" means a beam whose energy per unit time is high enough that the cluster of the spherical parts can be formed on the surface of the metal member.

The high-energy beam is typically a laser, but not limited to this, and may be a beam generated by an electron gun.

A method for manufacturing the metal-resin composite molded product according to one embodiment includes irradiating the surface of the metal member with a high-energy beam such as a laser and thereby forming the unevenness on the surface of the metal member, and then melt-joining the thermoplastic resin to the metal member including the surface on which the unevenness is formed. In one embodiment, the cluster of the substantially spherical parts are formed on the surface (joint surface area) of the metal member.

Forming the cluster of the spherical parts on the joint surface area included in the metal member and joined to the resin enables the melted resin to enter into areas of the cluster of the spherical parts when the metal member and thermoplastic resin are insert-molded. Thereby, adhesion between the metal and the resin can be enhanced at the molding stage. Thus, the manufactured metal-resin composite molded product can have higher airtightness at the joint surface area of the metal member than in a conventional case.

An area in which the cluster of the spherical parts are formed on the surface of the metal member is preferably the entire joint surface area included in the metal member and joined to the resin, but is not limited to this. For example, a sufficiently high level of airtightness can be secured at the joint surface area of the metal member when the cluster of the spherical parts are formed over a significant percentage of the joint surface area, for example, over an area equal to or larger than a specific percentage of the joint surface area. The specific percentage is within a range from 70% to 80%.

For example, when the entire joint surface area included in the metal member and joined to the resin is an irradiation target of a laser, a laser scanning pitch larger than an irradiation diameter of the laser results in occurrence of an area that is included in the joint surface area and that is not irradiated with the laser. Even in this case, when the area that is included in the joint surface area and that is not irradiated with the laser is relatively small, a sufficiently high level of airtightness is secured at the joint surface area of the metal member.

The inventors of the present application further focused attention on shapes of the spherical parts constituting the cluster formed on the surface of the metal member, and researched a relation between various surface roughness parameters of the surface of the metal member and airtightness of the joint surface area included in the metal member and joined to the resin. As a result, the inventors have found that the airtightness can be significantly enhanced by setting, within a predetermined range, Spc (i.e., an arithmetic mean peak curvature) for the cluster of the spherical parts. Spc (i.e., an arithmetic mean peak curvature) is a surface texture parameter defined in ISO25178, and represents a mean of principal curvatures of the peaks formed on an evaluation-target surface.

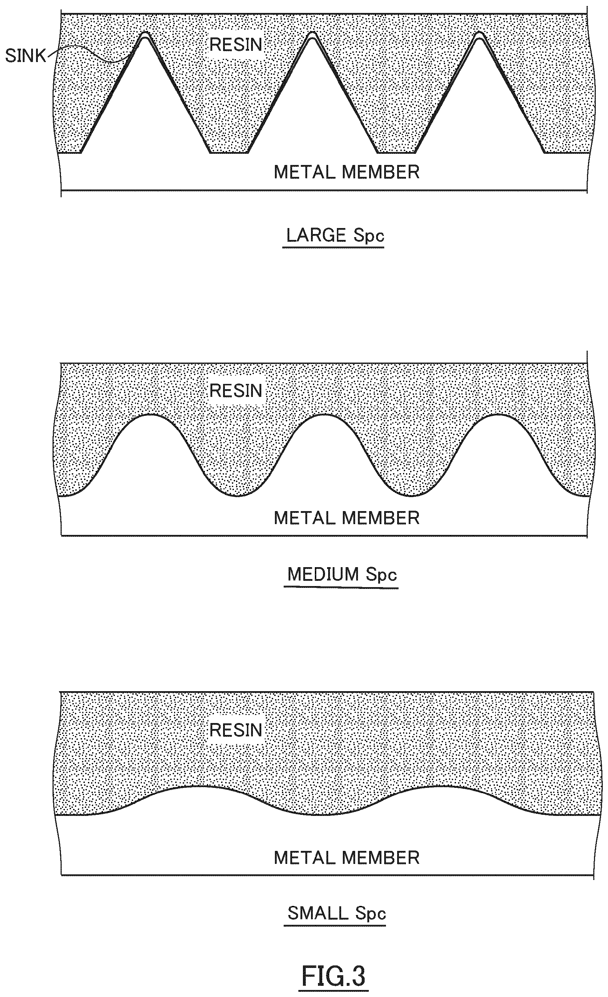

The reason why the airtightness of the joint surface area included in the metal member and joined to the resin is enhanced by setting, within the predetermined range, Spc of the cluster of the spherical parts is presumed as follows, with reference to FIG. 3.

FIG. 3 schematically illustrates the joint surface area between the metal member and the resin in a case ("large Spc") where Spc of the cluster of the spherical parts formed on the surface of the metal member is a large value, in a case ("medium Spc") where Spc of the cluster is a medium value, and in a case ("small Spc") where Spc of the cluster is a small value. In the case of the large Spc, the peaks of the cluster of the spherical parts have sharp shapes, thus causing sinks (shrinkage) when the thermoplastic resin cools. In this case, gaps are likely to be generated between the resin and the metal at joint surfaces of the peaks because of the sharp shapes of the peaks, which is disadvantageous in terms of the airtightness. Meanwhile, in the case of the small Spc, the entirety of the cluster of the spherical parts forms a surface texture in which the surface is smooth, and thus, a surface area of a joint portion is small so that adhesion between the metal and the resin is not enhanced at the molding stage. In view of the above, it is presumed that, in the case of the medium Spc, the melted resin sufficiently enters into an area of the cluster of the spherical parts on the surface of the metal member, and thus, adhesion between the metal and the resin becomes extremely high at the molding stage.

Specifically, Spc of the peaks of the spherical parts constituting the cluster on the surface of the metal member is preferably in a range from 2500 to 5000 (1/mm), more preferably in a range from 3000 to 5000 (1/mm), and most preferably in the range from 3500 to 5000 (1/mm).

Energy that the laser irradiation applies to the joint surface area included in the metal member and joined to the resin is controlled in order to adjust the Spc to fall within a desired range. When a pulsed laser is used as the laser, energy "E" per pulse is expressed as P/f, where "P" is the average output and "f" is the frequency. Accordingly, adjusting one or both of the average output "P" (so called a laser output) and the frequency "f" can control energy applied to the joint surface area included in the metal member and joined to the resin. For example, increasing the frequency of the pulsed laser decreases an amount of the energy per pulse applied to the surface of the metal member, and thus, the Spc tends to decrease. Conversely, decreasing the frequency of the pulsed laser increases an amount of the energy per pulse applied to the surface of the metal member, and thus, the Spc tends to increase. However, when an amount of the energy becomes sufficiently large, the Spc is saturated. In addition, even under the same laser irradiation conditions, the Spc may vary depending on environmental conditions (e.g., it is considered that the Spc may decrease when an environmental temperature is low). For this reason, after laser irradiation, it is confirmed whether the Spc is within a desired range.

### EXAMPLES

The following describes Examples of the metal-resin composite molded product.

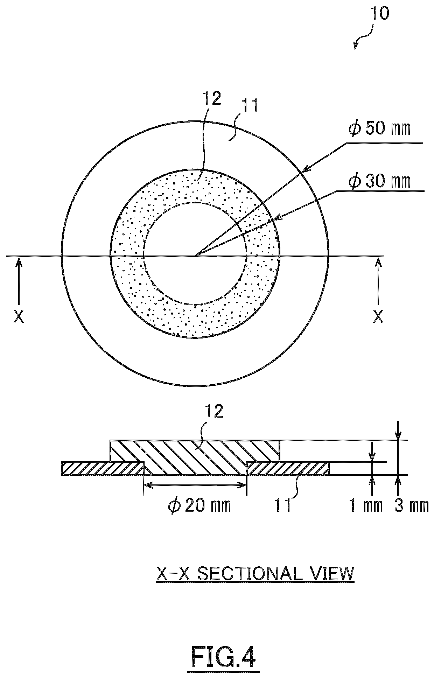

In each of Examples, the metal-resin composite molded product 10 (hereinafter referred to as "test piece 10") having the shape illustrated in FIG. 4 was fabricated as a test piece.

As illustrated in FIG. 4, the test piece 10 includes an annular metal member 11 having an inner hole at the center, and a resin molded product 12 arranged in the inner hole of the metal member 11. The metal member 11 has an outer diameter of Φ50 mm, an inner-hole diameter of Φ20 mm, and a thickness of 1 mm. The resin molded product 12 has an outer diameter of Φ30 mm and a thickness of 3 mm.

The following materials were used as the metal member 11 and the resin molded product 12.
- The metal member: aluminum A5052 and copper C1100
- The thermoplastic resin:
   polyphenylene sulfide (PPS) (Durafide (registered trademark) 1140A6 (manufactured by Polyplastics Co., Ltd.))
   polybutylene terephthalate (PBT) (Duranex (registered trademark) 930MA (manufactured by Polyplastics Co., Ltd.))
   polyphenylene sulfide (PPS) (Durafide (registered trademark) 6150T73 (manufactured by Polyplastics Co., Ltd.))

Before the metal member 11 was joined to the resin molded product 12, the laser processing was performed concentrically on a range (the joint surface area joined to the resin molded product 12) from Φ20 mm to Φ26 mm on the surface of the metal member 11 by the laser processing machine (ML-7350DL manufactured by Amada Weld Tech Co., Ltd.).

The laser irradiation conditions in Examples 1 to 6 are represented in below-described Table 1. The laser irradiation conditions in Comparative Examples 1 to 11 are represented in below-described Tables 2 and 3. Although not represented in Tables, in all Examples and Comparative Examples, the laser irradiation pitch was set to 10 µm and the irradiation diameter was set to 58 µm. The pitch is a distance between the concentric circles scanned by the laser. Since the pitch is smaller than the irradiation diameter, the entire joint surface area was irradiated with the laser.

For each of all Examples and Comparative Examples, the surface of the metal member 11 was observed with a scanning electron microscope (SEM). As a result, it was confirmed that the cluster of the spherical parts were formed over the entire surface area. Further, Spc of the peaks of the spherical parts constituting the cluster formed on the surface of the metal member 11 was measured using a laser microscope VK-X3000 manufactured by Keyence Corporation (refer to Tables 1 to 3).

In Comparative Examples 1, 7, and 8, the laser output was relatively low and the frequency was high, and thus, it is understood that an amount of the energy per pulse applied to the surface of the metal member 11 was small and the Spc was low.

After the laser processing was performed on the metal member 11, the metal member 11 was joined to the resin by insert molding using the metal member 11 as an insert member under the following conditions. Thereby, the test piece 10 illustrated in FIG. 4 was formed.
- Injection molding machine: TR100EH manufactured by Sodick Co., Ltd.
- Cylinder temperature: 320°C (in the cases of 1140A6 and 6150T73) and 260°C (in the case of 930MA)
- Mold temperature: 150°C
- Injection speed: 15 mm/s
- Holding pressure: 50 MPa

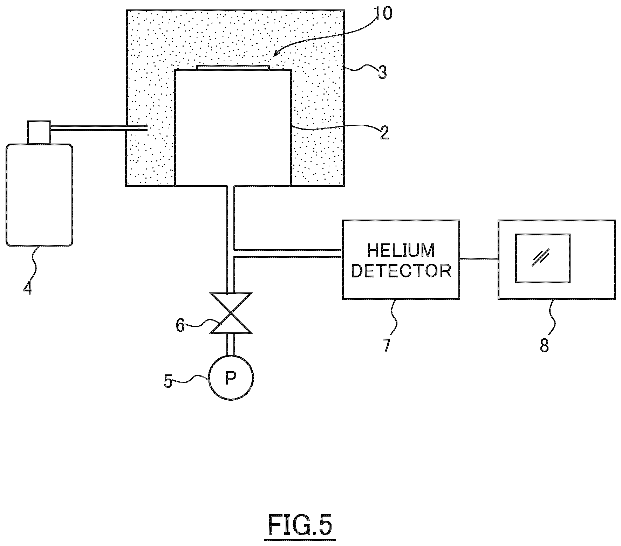

Next, an airtightness test was performed on the test pieces 10 molded as Examples and Comparative Examples. FIG. 5 illustrates a configuration of a test device for the airtightness test (a helium leak test in a vacuum method).

As illustrated in FIG. 5, a jig 2 and the test piece 10 are placed in a chamber 3 that is sealed from an outside. The jig 2 has a rectangular-parallelepiped shape with a bottom. The test piece 10 is placed on an upper portion of the jig 2, and thereby, an inside of the jig 2 is sealed from a rest of an inside of the chamber 3. A valve 6 is opened, and the inside of the jig 2 is evacuated by the vacuum pump 5. Next, the valve 6 is closed, and a helium cylinder 4 fills the chamber 3 with a helium gas. A helium detector 7 detects the helium gas leaking from the joint portion in the test piece 10 in the chamber 3. A control device 8 displays the detected result of the helium gas.

The helium leak tester G-FINE manufactured by Cosmo Instruments Co., Ltd. and L300i manufactured by Inficon Co., Ltd. were used as the helium detector 7.

A pressure of the helium gas in the chamber 3 was set to 400 kPa, and a vacuum pressure in the jig 2 was set to 100 kPa. When airtightness at the joint portion between the metal member 11 and the resin molded product 12 in the test piece 10 is low, the helium gas in the chamber 3 flows into the jig 2, and is detected by the helium detector 7. In this test, when a pressure (detected pressure) of the helium gas detected by the helium detector 7 was equal to or higher than 1.0 × 10⁻⁷ (= 1.0E-7) Pa·m³/s, it was determined that the airtightness was NG, and when a detected pressure of the helium gas was lower than 1.0 × 10⁻⁷ (= 1.0E-7) Pa·m³/s, it was determined that the airtightness was OK.

Regarding the detected pressure in the airtightness test on the test piece, Table 1 represents the results of Examples 1 to 6, and Table 2 and Table 3 represent the results of Comparative Examples 1 to 11.

**[Table 1]**

| | Example 1 | Example 2 | Example 3 | Example 4 | Example 5 | Example 6 |
|---|---|---|---|---|---|---|
| Resin | 1140A6 | 1140A6 | 930MA | 1140A6 | 6150T73 | 6150T73 |
| Metal | A5052 | C1100 | A5052 | A5052 | C1100 | C1100 |
| Laser Output (W) | 11.3 | 11.3 | 19.5 | 9.6 | 19.5 | 44.0 |
| Frequency (kHz) | 50 | 50 | 5 | 50 | 50 | 50 |
| Scanning Speed (mm/s) | 1000 | 1000 | 1000 | 1000 | 1000 | 1000 |
| Laser Scanning Pitch (µm) | 10 | 10 | 10 | 20 | 10 | 10 |
| Spc (1/mm) | 4799 | 3701 | 4627 | 4003 | 3896 | 4999 |
| Detected Pressure (Pa·m³/s) | 1.0E-10 | 1.0E-11 | 1.0E-9 | 1.0E-10 | 1.0E-10 | 1.0E-10 |

**[Table 2]**

| | Comparative Example 1 | Comparative Example 2 | Comparative Example 3 | Comparative Example 4 | Comparative Example 5 | Comparative Example 6 |
|---|---|---|---|---|---|---|
| Resin | 1140A6 | 1140A6 | 1140A6 | 1140A6 | 1140A6 | 1140A6 |
| Metal | A5052 | A5052 | A5052 | A5052 | A5052 | A5052 |
| Laser Output (W) | 11.3 | 15.5 | 19.5 | 44 | 44 | 44 |
| Frequency (kHz) | 100 | 50 | 50 | 50 | 50 | 50 |
| Scanning Speed (mm/s) | 1000 | 1000 | 1000 | 1000 | 500 | 100 |
| Laser Scanning Pitch (µm) | 10 | 10 | 10 | 10 | 10 | 10 |
| Spc (1/mm) | 2091 | 5208 | 5427 | 5871 | 6341 | 7419 |
| Detected Pressure (Pa·m³/s) | 1.0E-5 | 1.0E-7 | 1.0E-6 | 1.0E-5 | 1.0E-5 | 1.0E-5 |

**[Table 3]**

| | Comparative Example 7 | Comparative Example 8 | Comparative Example 9 | Comparative Example 10 | Comparative Example 11 |
|---|---|---|---|---|---|
| Resin | 1140A6 | 930MA | 930MA | 930MA | 930MA |
| Metal | C1100 | A5052 | A5052 | A5052 | A5052 |
| Laser Output (W) | 16 | 16 | 32 | 32 | 32 |
| Frequency (kHz) | 100 | 100 | 50 | 50 | 50 |
| Scanning Speed (mm/s) | 1000 | 1000 | 1000 | 500 | 100 |
| Laser Scanning Pitch (µm) | 10 | 10 | 10 | 10 | 10 |
| Spc (1/mm) | 1200 | 2091 | 5871 | 6341 | 7419 |
| Detected Pressure (Pa·m³/s) | 1.0E-5 | 1.0E-5 | 1.0E-6 | 1.0E-6 | 1.0E-5 |

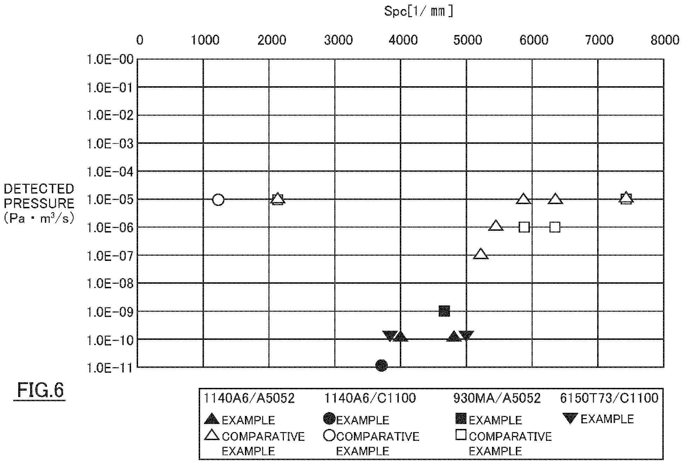

FIG. 6 is a graph plotting a relation between the detected pressure in the airtightness test and Spc of the peaks of the spherical parts constituting the cluster formed on the surface of the metal member 11, for Examples 1 to 6 and Comparative Examples 1 to 11.

It is confirmed from FIG. 6 that when Spc of the cluster is in a range from 2500 to 5000 (1/mm), the airtightness of the joint portion between the metal member and the resin is high (i.e., the detected pressure is low). In a case where Spc of the cluster is in a range from 3000 to 5000 (1/mm), the detected pressure in the airtightness test is still lower, and thus, this case is preferable. In a case where Spc of the cluster is in a range from 3500 to 5000 (1/mm), the detected pressure in the airtightness test is yet lower, and thus, this case is even more preferable.

Although the embodiment of the present invention is described above in detail, the present invention is not limited to the above-described embodiment. The above-described embodiment can be variously improved or modified within a range that does not depart from the essence of the present invention.

The present invention is related to Japanese Patent Application No. 2022-178512 filed with the Japan Patent Office on November 8, 2022, the entire contents of which are incorporated by reference into Description of the present application.

## Claims

1. A metal-resin composite molded product comprising a metal member and a thermoplastic resin that are joined to each other, wherein
an arithmetic mean peak curvature for a surface portion is in a range from 2500 to 5000 (1/mm), the surface portion being included in one surface of the metal member and joined to the thermoplastic resin.

2. The metal-resin composite molded product according to claim 1, wherein
a cluster of substantially spherical parts are formed on the surface portion, and the arithmetic mean peak curvature for the cluster is in a range from 2500 to 5000 (1/mm).

3. The metal-resin composite molded product according to claim 1, wherein
the arithmetic mean peak curvature for the surface portion is in a range from 3000 to 5000 (1/mm).

4. The metal-resin composite molded product according to claim 1, wherein
the arithmetic mean peak curvature for the surface portion is in a range from 3500 to 5000 (1/mm).

5. A method for processing a metal member, comprising:
irradiating a surface of the metal member with a high-energy beam, thereby causing an arithmetic mean peak curvature for the surface to be in a range from 2500 to 5000 (1/mm).

6. A method for processing a metal member, comprising:
irradiating a surface of the metal member with a high-energy beam, thereby forming a cluster of substantially spherical parts on the surface, the cluster whose arithmetic mean peak curvature is in a range from 2500 to 5000 (1/mm).

7. The method for processing the metal member according to claim 5, wherein
the arithmetic mean peak curvature for the surface is in a range from 3000 to 5000 (1/mm).

8. The method for processing the metal member according to claim 5, wherein
the arithmetic mean peak curvature for the surface is in a range from 3500 to 5000 (1/mm).

9. A method for manufacturing a metal-resin composite molded product including a metal member and a thermoplastic resin that are joined to each other, the method comprising:
irradiating a surface of the metal member with a high-energy beam, thereby causing an arithmetic mean peak curvature for the surface to be in a range from 2500 to 5000 (1/mm); and
then inserting the metal member into a mold; and injection-molding the thermoplastic resin by the mold, thereby joining the thermoplastic resin to the surface of the metal member.

10. A method for manufacturing a metal-resin composite molded product including a metal member and a thermoplastic resin that are joined to each other, the method comprising:
irradiating a surface of the metal member with a high-energy beam, thereby forming, on the surface, a cluster of substantially spherical parts whose arithmetic mean peak curvature is in a range from 2500 to 5000 (1/mm);
inserting, into a mold, the metal member on which the cluster of the substantially spherical parts have been formed; and
injection-molding the thermoplastic resin by the mold, thereby joining the thermoplastic resin to the surface of the metal member.

11. The method for manufacturing the metal-resin composite molded product according to claim 9, wherein
the arithmetic mean peak curvature for the surface is in a range from 3000 to 5000 (1/mm).

12. The method for manufacturing the metal-resin composite molded product according to claim 9, wherein
the arithmetic mean peak curvature for the surface is in a range from 3500 to 5000 (1/mm).
